# EUROPEAN PATENT APPLICATION

(11) **EP 3 059 745 A1**
(43) Date of publication of application: **24.08.2016**
(21) Application number: 16153136.3
(22) Date of filing: 28.01.2016
(51) Int. Cl.: H01F 27/08, H01F 27/10, F01D 25/12, H02K 3/24

(54) **FORCED COOLED ELECTRICAL COIL CAP AND COIL BOBBIN**

(30) Priority: 20.02.2015 GB 201502873
(71) Applicant: Rolls-Royce plc, London SW1E 6AT (GB)
(72) Inventor: Murray, Christopher, Derby, Derbyshire DE24 8BJ (GB)
(74) Representative: Rolls-Royce plc

(57) **Abstract**

This invention concerns cooling, specifically for electrical interface devices containing electrical coils (8,108,208,408,508) used in thermally challenging environments such as within gas turbine engines. A force cooled coil cap (2,102,302,402) or bobbin (202,502) has a first surface to be located immediately adjacent or in contact with the coil (8,108,208,408,508) and a chamber (6,106,206,306,406',506') through which a coolant (14,114,214,314,414,514) can flow.

## Description

### BACKGROUND OF THE INVENTION

The present invention relates to improved means of cooling, specifically for electrical interface devices containing electrical coils. In particular, the invention relates to such cooling means for use in thermally challenging environments such as within gas turbine engines.

In aerospace applications, certain Electrical Interface Devices are required to operate in a thermally challenging environment in the gas turbine engine core zones. Many of these Electrical Interface Devices contain simple electrical coils including, but not limited to, solenoids, servovalves, inductive probes, electric motors and Rotary and Linear Variable Differential Transformers (R/LVDT's). They are subjected to heat conduction through the parent body to which they are attached, heat radiation from the engine casings and adjacent systems, and internal coil heating from the application of an electric current necessary to achieve the control function. All of this heat is rejected into the component's surrounding air environment.

As gas turbine engines strive for greater efficiency, muscle medium (pneumatic and fluidic) temperatures continue to rise, and it becomes less desirable to cool the core zones in which such devices are located. Additionally, due to space constraints, some components may in future be required to reside in hotter sections of the core zone than is achievable today with the existing packaged coil arrangements.

It will be appreciated that the ever higher ambient temperatures within a gas turbine, coupled with increasing levels of conducted heat, radiated heat, and self-generated electrical heat of the system, will reduce the heat sink capability of the surrounding air. This can create operating conditions where the Electrical Interface Device cannot reject sufficient heat to remain below the ceiling temperatures of the standard winding wire materials. Indeed, many applications are fast reaching a point where there will be negative thermal margin into which to reject heat, with the result that heat will not transfer to the surroundings and components will thus break down and/or fail.

For example, certain winding wire technologies have a ceiling capability of about 220ºC, above which the winding wire insulants and encapsulants start to break down in accordance with a time at temperature characteristic.

A number of thermal isolation solutions exist in the industry which offer a stand-off, or thermal barrier, to reduce the conducted and radiated heat from the parent body to which the Electrical Interface Device is attached. However, these solutions are not suitable for use in arrangements where the surrounding air temperature is in excess of the temperature ceiling of the standard winding wire assemblies (circa 220ºC). Known solutions of this type are also expensive.

A number of developments are underway in the industry working to establish winding wire arrangements which have a much increased ceiling capability of around 400ºC, but these are relatively new and unproven in the turbine engine environment. The materials required, and the solutions themselves, are also expected to be undesirably expensive.

It is an aim of the present invention to provide means for improving the cooling of an electrical coil in a simple and cost effective manner.

### BRIEF SUMMARY OF THE INVENTION

According to a first aspect of the invention there is provided a cooling device for an electrical coil as defined in the appended claim 1. Further beneficial features are recited in the associated dependent claims.

In use, the cooling device of the invention contacts, or is in very close proximity to, at least one surface of the coil to be cooled. For example, electrical devices incorporating a coil winding also typically incorporate a coil cap, immediately outside the coil winding, to environmentally seal and protect the coil from its surroundings. This standard coil cap could be replaced with a cooled electrical coil cap according to the invention, and cool, or at least be comparatively cooled by the preferably pressurised cooling fluid which is passed through the chamber in the body of the coil cap to affect the coil cooling cap function.

By ensuring that the cooling fluid temperature never goes above the temperature ceiling capability of the coil winding which it encapsulates, the standard electrical coil winding assembly can be prevented from overheating even where the surrounding temperatures are in excess of this ceiling temperature.

Cooling can be improved if the chamber in the body of the cooling device comprises a tortuous flow path to direct the fluid flow. By 'tortuous' is meant a flow path that is convoluted, serpentine or winding. For example, the tortuous flow path may be defined by baffles or fins provided within the chamber, or may comprise a continuous helical passage.

The cooling device can be manufactured via numerous manufacturing methods. For example, the body of the cooling device may be formed from a helically wound elongate hollow section, such as a hollow tube, which also forms the helical passage. Alternatively, the body may be formed by casting, or manufactured via additive methods.

The body of the cooling device may also be formed by separately forming the first and second walls before being brazed them together to form the chamber in the container body. The first wall may be machined with integral upstanding fins, which may provide reinforcement between the first and second walls and/or may be the fins that define the tortuous flow path within the chamber.

The body of the cooling device may comprise, for example, an aluminium alloy or a stainless steel. In general, the cooling device may be formed from any material which can operate within the environmental conditions of the system in which it is applied.

The body of the cooling device may be shaped and sized to fit within an electrical coil such that an outer surface of the body contacts, or is in close proximity to, an inside surface of the coil, thereby serving as a force cooled coil bobbin.

Alternatively, the body of the cooling device may be shaped and sized to fit around an electrical coil such that an inner surface of the body contacts, or is in close proximity to, an outer surface of the coil, acting as a force cooled electrical coil cap. The cooled electrical coil cap would environmentally seal the coil from the external surroundings, just as a standard coil cap would.

In either case, the body may be in close proximity to or contact, in use, an upper or lower surface of the coil to be cooled.

If required, a force cooled coil bobbin and coil cap according to the invention could be used together to provide cooling to both inner and outer surfaces of an electrical coil, providing a near fully encapsulated cooling means to the coil element.

Supply and return lines for the cooling flow can be fed into and out of the cooling device in numerous arrangements. However, an inlet to the chamber is preferably provided at a base of the body which, in use, engages with a surface of a parent body on which the coil is provided. This simplifies supply of a cooling fluid to flow from a larger bore supply line gallery contained within the parent body.

Similarly, an outlet from the chamber may be provided at a base of the body which, in use, engages with a surface of a parent body on which the coil is provided, so that return flow from the cooling device could readily pass to a larger bore return line gallery contained within the parent body.

Additionally or alternatively, particularly for a pneumatically cooled variant, an outlet from the chamber may be provided at a different location, for example through one or more outlets provided through the second surface of the body. A plurality of outlets could comprise small holes peppered around the outer wall of the body, each hole being small enough to prevent the ingress of fluid contaminants.

An outlet may additionally, or alternatively, be provided adjacent a further component associated with the electrical coil. In such cases, the outlet of the cooling flow may advantageously be directed over the further component, for example an electrical connector, associated with the electrical coil to cool the further component.

If the flow rate is considered low enough not to affect the performance of the wider system, then a return line may be unnecessary so that all fluid from the chamber could be exhausted through the second surface of the body and/or adjacent a further component.

The cooling fluid may be a liquid, for example fuel, oil or hydraulic fluid from a gas turbine in which the cooling device is installed; or may be a gas, for example bleed air from a compressor stage of a gas turbine in which the cooling device is installed. The internal diameter/dimensions of the cooling channel within the body can be sized to avoid the need for system level filtration, and thus may differ for gas and liquid cooled variants.

Should the fuel system be used to provide the cooling medium, this would typically be high pressure fuel taken from downstream of the high pressure fuel pump, and fed back into a spill return loop. Other arrangements would also be possible provided a pressure difference sufficient to drive the cooling flow could be guaranteed.

If engine compressor bleed air is used to provide the cooling medium, then this would typically be bled off at as low a compressor stage as is possible whilst ensuring that the offtake temperature never exceeds the temperature capability of the electrical coil winding. The bleed air could then be fed back into the engine compressor at least one compression stage earlier to ensure a sufficient pressure difference to drive the cooling flow through the cooling circuit. Alternatively, it could exhaust overboard.

The arrangement could use higher pressure air if it was pre-cooled after being bled from the engine compressor.

Wherever practicable, any of the essential or preferable features defined in relation to any one aspect of the invention may be applied to any further aspect. Accordingly the invention may comprise various alternative configurations of the features defined above.

### BRIEF DESCRIPTION OF THE DRAWINGS

Practicable embodiments of the invention are described in further detail below by way of example only with reference to the accompanying drawings, of which:
Fig. 1 shows a first embodiment of a cooled electrical coil cap according to the invention;
Fig. 2 shows a second embodiment of a cooled electrical coil cap according to the invention;
Fig. 3 shows a first embodiment of a cooled electrical coil bobbin according to the invention;
Fig. 4 shows a third embodiment of a cooled electrical coil cap according to the invention;
Fig. 5 shows a fourth embodiment of a cooled electrical coil cap according to the invention; and
Fig. 6A and 6B show a second embodiment of a cooled electrical coil bobbin according to the invention.

### DETAILED DESCRIPTION OF THE INVENTION

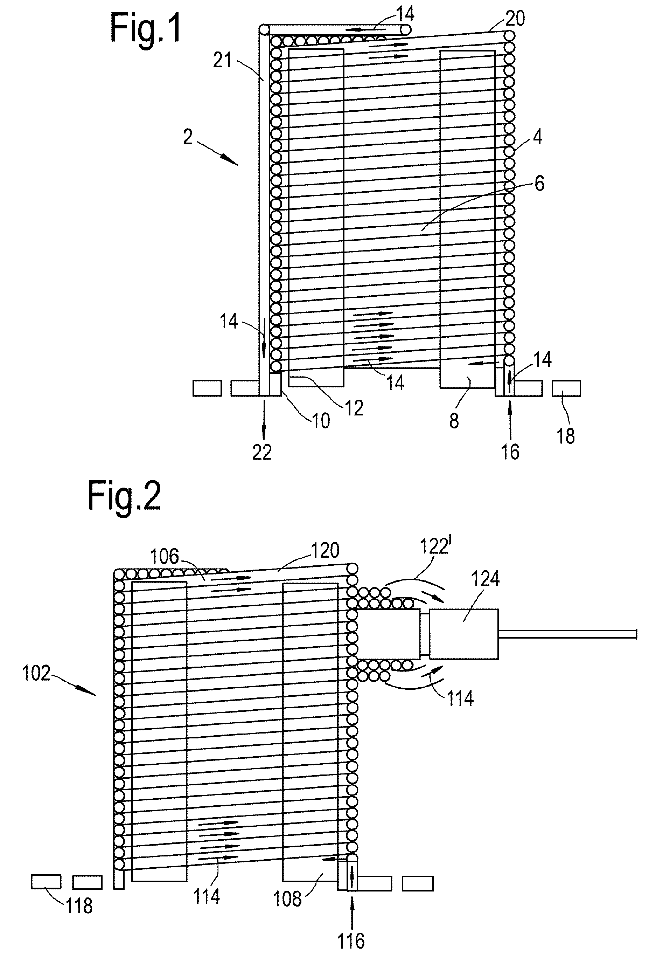

Figure 1 shows a schematic view of a cooled electrical coil cap 2 according to the present invention.

The cooled electrical coil cap 2 is manufactured from an aluminium alloy or a stainless steel using a casting method. A helical passage 6 is provided through body 4 of the cooled electrical coil cap 2 to allow a cooling fluid to flow through the body 4 during use to cool a coil 8 provided therein. The inner surface 10 of the cooled electrical coil cap 2 is shown in contact with an outer surface 12 of the coil 8.

It can be seen that the coil cap 2 completely surrounds the coil 8 so as to environmentally seal the coil 8 from the external surroundings, just as a standard coil cap would.

The coil cap 2 is designed for use in a gas turbine, and uses a liquid cooling medium, in particular engine fuel, in its cooling flow 14. It should be understood, however, that many other liquid or gaseous coolants such as, for example, compressor bleed air could alternatively be used without fundamentally altering the invention.

The cooling flow 14 through the helical passage 6 is shown flowing from an inlet 16 provided on one side of the cap 2 at the base 18 of the body 4, upwards around the coil 8 to a top 20 thereof, and then back down through a return line 21 to an outlet 22 also provided at the base 18. By providing both the inlet 16 and outlet 22 of the helical passage 6 at the base 18 of the body 4, connections to the helical passage 6 can easily be provided at the interface between the cap 2 and the parent body. In such an arrangement no additional pipework, or unions, would be necessary to connect the passageway 6 to larger bore supply and return line galleries contained within the parent body. This would also support parallel duplication of the arrangement as may be considered/required in a bank of solenoids for example. However, it would also be possible to provide an outlet 22 elsewhere on the container body for connection to a separate return line if this arrangement would be preferable in particular circumstances.

Alternatively, particularly for a pneumatically cooled variant of the invention, a return line 21 may be unnecessary if the flow rate is considered low enough to not affect the performance of the wider system. In such an arrangement the cooling flow could instead be exhausted directly to the atmosphere rather than having to be directed back to the base of the cap 2.

An example of such an alternative cooled electrical coil cap 102 according to the invention is shown schematically in Figure 2. Again, the particular coil cap 102 illustrated is designed for use in a gas turbine or similar environment.

The embodiment of Figure 2 is similar in many respects to that shown in Figure 1, but significantly no return line is provided. As such, the base 118 of the cap 102 has an inlet 116 provided as before, but no outlet similar to the outlet 22 in Figure 1 is provided. The cooled electrical coil cap 102 of Figure 2 relies on gas, in particular bleed air from a compressor stage of the turbine engine, as its cooling flow, so the internal cross section of the helical passage 106 may be smaller than that of a liquid cooled cap 2 as shown in Figure 1. Additionally, the cooling flow 114 is simply ejected to the atmosphere at an outlet 122' from the helical passage 106 provided near the top 120 of the cap 102 rather than being directed back to the base 118. This provides the benefit that the air can then be directed over another component 124 associated with the coil 108, and thereby additionally help to reduce the temperature of the further component 124.

As shown in Figure 2, the cooling flow exhausted from the cap 102 impinges onto an ESC10 connector junction, thereby allowing the cooling flow 114 to wash over and cool the ESC10 connector 124. These connectors 124 are themselves limited to 260ºC, so can require cooling to operate in high temperature engine environments. The arrangement of Figure 2 (depending on cooling flow rate and efflux temperature) allows the ESC10 connections 124 to be maintained below their ceiling temperatures in a hot zone.

The invention has been described above with reference to a coil cap 2,102. However, it will be understood that the same concept can be employed in relation to a coil bobbin, so a force cooled coil bobbin arrangement could also be considered.

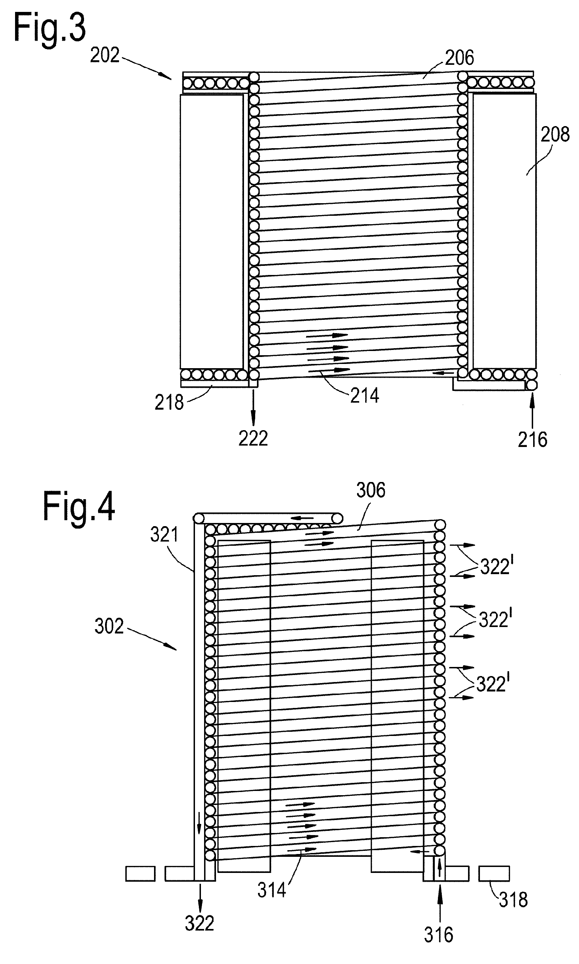

Figure 3 is a schematic view of a cooled electrical coil bobbin 202 in accordance with the present invention.

The coil bobbin 202 operates on the same principles as the coil cap 2 of Figure 1, with cooling flow 214 provided through a helical passage 206, and again is designed for use in a gas turbine or similarly hostile environment. The key difference is that the coil bobbin 202 is located on the interior of the coil 208 to be cooled, rather than surrounding its outside surface.

The coil bobbin 202 is shown with inlet and return line connections 216,222 at its base 218 similar to the coil cap 2 of Figure 1. However, a skilled reader will appreciate that a cooled coil bobbin 202 could operate without a return line, similarly to the coil cap 102 of Figure 2, particularly if pneumatically charged.

The coil bobbin 202 could be used in place of the coil cap 2 of Figure 1 or the coil cap 102 of Figure 2. However, if required, a force cooled coil bobbin 202 and coil cap 2,102 according to the invention could be used together to provide cooling to both inner and outer surfaces of an electrical coil.

The coil cap 302 shown in Figure 4 is similar in many ways to that shown in Figure 1. Again, a helical passage 306 is provided for the cooling flow 314 flowing from an inlet 316 through the cap 302. The key difference in the embodiment of Figure 4 is that multiple small holes are provided in radially outer surface of the helical tube/passage 306 to provide outlets (illustrated by arrows 322') for the cooling flow 314 from the coil cap 302. Only six outlets 322' are illustrated in Figure 4, although a far greater number would be provided in practice. The precise number and size of the holes forming the outlets 322' would be determined based on particular operating pressures and flow rates to achieve the desired cooling flow distribution around the coil cap 302 in a particular application. However, the holes would be small enough to prevent the ingress of moisture from the ambient zone into the helical passageway 306 during an engine shut down period when the system is fully depressurised.

Figure 4 illustrates the outlets 322' to the atmosphere together with an outlet 322 from a return line 321 provided at the base 318 of the coil cap 302 as in Figure 1. It should be understood, however, that the return line 321 could be omitted from the coil cap 302 shown in Figure 4 such that all cooling flow 314 is exhausted to the atmosphere around the coil cap 302 via the radial outlets 322'.

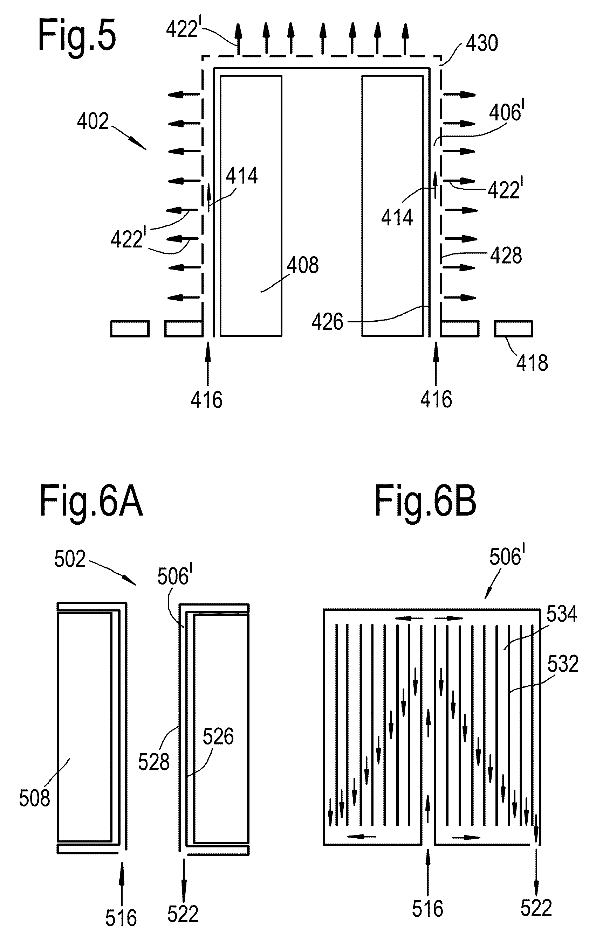

Figure 5 shows a cross-sectional schematic view of an alternative embodiment of a coil cap 402 which does not require a return line for cooling flow 414. The cooling flow 414 is supplied, from a cooling gallery, to the coil cap 402 of Figure 5 through inlets 416 at the base 418 of the cap 402 and exhausts into the ambient zone.

Unlike the embodiments described so far, the coil cap of Figure 5 lacks a helical passage for the cooling flow. Instead, a double skinned cap 402 provides an annular cavity 406' within which the coolant flow 414 circulates. The inner skin, or wall, 426 of the coil cap 402 surrounds the coil 408 providing a continuous barrier between the coil 408 and the cooling flow 414. In contrast, the outer skin, or wall 428 of the coil cap 402 is provided with multiple holes 430 distributed around the sides and top of the cap 402 which provide outlets 422' to the atmosphere for the cooling flow 414.

The holes 430 are arranged as appropriate to deliver a thermal distribution that achieves the cooling function. Various patterns/distributions of holes 430 may be provided depending on the required cooling characteristics. An individual coil cap 402 could therefore be 'tuned' to a particular coil based on the outputs of a thermal model showing heat distribution around the cap. This allows the total open area of all the holes 430 to be minimised so that no cooling flow is provided beyond that necessary to keep the temperature below a predetermined maximum for any given component. The predetermined maximum temperature will typically be set an acceptable margin below the critical temperature of the least temperature capable component.

Cooling within the system is parasitic, so minimising or eliminating any surplus cooling is beneficial to the performance of the system as a whole.

As with the embodiment of Figure 3, the holes would also be sized to prevent the ingress of moisture from the ambient zone into the cap annular cavity during an engine shut down when the system is fully depressurised.

Figure 6A shows a schematic cross-sectional view of a double skinned coil bobbin arrangement 502 as an alternative to the coil bobbin 202 of Figure 3. An inlet 516 and an outlet 522 are provided at the base 518 of the bobbin 502 for connection to larger bore supply and return line galleries contained within the parent body. Both inlet 516 and outlet 522 are provided at the interior of the coil 508 directly in communication with an annular chamber 506' provided by the bobbin 502.

Figure 6B shows a schematic view of the interior of the annular chamber 506' if flattened out. The chamber 506' is provided with directional cooling fins 532 to direct the cooling flow 514 within the chamber 506' during use. Cooling flow 514 enters through the inlet 516 in the base 518 of the bobbin 502 from a common cooling supply gallery and feeds a number of parallel cooling paths 534 defined between the fins 532. The cooling flow 514 then feeds into a common return line, exiting the base of the coil bobbin 502 through outlet 522 and into a cooling line return gallery.

Aside from defining cooling paths 534 within the annular chamber 506', the fins 532 also act as rigid support between the two walls 526,528, or skins, making up the chamber 506'. A first wall 526 may, for example machined from solid material complete with the flow directing fins 532, and the second wall 528 could then be brazed to the first wall 526 to form the bobbin 502.

Despite the advantages of the cooling fins, the arrangement described in Figures 6A and 6B would also work if the cooling fins were omitted, leaving a pure annular cavity. Similarly, the embodiment of Figure 5 could be modified to include fins within the cavity 406'. In this context, the solid inner wall 426 would beneficially be formed complete with the cooling fins and the outer wall 428, complete with its multiple perforations, would then be brazed to the inner wall 426.

The inlet temperature, inlet pressure, and flow rate of the cooling flow which passes through the cooling device can be a function of one or more of the conducted heat from the parent body to which the Electrical Interface Device is attached, the heat radiated from the engine casings and adjacent systems, and the self-heating of the coil as a result of the applied electrical current to achieve the control/feedback function. This cooling flow rate can be limited by an inlet restrictor in the cap and/or bobbin.

The solution beneficially lends itself to being readily retro-fitted to legacy products where there are temperature margin concerns.

## Claims

1. A cooling device (2, 102, 202, 302, 402, 502) for an electrical coil (8, 108, 208, 408, 508), comprising a body (4) with spaced apart first (10, 426) and second (428) surfaces, said body being shaped and sized to fit within or outside the coil to be cooled such that the first surface of the body is located, in use, immediately adjacent an entire first surface (12) of said coil, wherein a chamber (6, 106, 206, 306, 406', 506') is provided between said spaced apart first and second surfaces in the body of the cooling device through which chamber a cooling fluid (14, 114, 214, 314, 414, 514) can be directed.

2. A cooling device according to claim 1, wherein the chamber comprises a tortuous flow path.

3. A cooling device according to claim 2, wherein the flow path is defined by baffles or fins (532) provided within the chamber (506').

4. A cooling device according to claim 2, wherein the flow path comprises a continuous helical passage (6, 106, 206, 306).

5. A cooling device according to any of the preceding claims, wherein the first and second surfaces comprise separately formed first and second walls (426, 428) which are brazed together to form the chamber (406') in the container body.

6. A cooling device according to claim 5, wherein the first wall (526) is machined with integral upstanding fins (532).

7. A cooling device according to claim 6, wherein the upstanding fins provide reinforcement between the first and second walls (526, 528).

8. A cooling device (202, 502) according to any of the preceding claims, wherein the body is shaped and sized to fit within an electrical coil (208, 508) such that the first surface of the body is an outer surface of the body and the first surface of the coil is an inside surface of the coil.

9. A cooling device (2, 102, 302, 402) according to any of claims 1 to 7, wherein the body is shaped and sized to fit around an electrical coil (8, 108, 408) such that the first surface of the body is an inner surface of the body and the first surface of the coil is an outer surface of the coil.

10. A cooling device according to any of the preceding claims, wherein an inlet to the chamber is provided at a base of the body which, in use, engages with a surface of a parent body on which the coil is provided.

11. A cooling device according to any of the preceding claims, wherein an outlet from the chamber is provided at a base of the body which, in use, engages with a surface of a parent body on which the coil is provided.

12. A cooling device according to any of the preceding claims, wherein an outlet from the chamber is provided through the second surface of the body.

13. A cooling device according to claim 12, wherein a plurality of outlets are provided through the second surface of the body.

14. A cooling device according to any of the preceding claims for use in a gas turbine, wherein the cooling fluid is the fuel, oil or hydraulic fluid of the gas turbine.

15. A cooling device according to any of the preceding claims for use in a gas turbine engine, wherein the cooling fluid is air from a compressor stage of the gas turbine engine.
